# EUROPEAN PATENT SPECIFICATION

(11) **EP 0 477 804 B1**
(45) Date of publication and mention of the grant of the patent: **02.08.1995**
(21) Application number: 91116074.5
(22) Date of filing: 20.09.1991
(51) Int. Cl.: B60S 1/38

(54) **A method for manufacturing a windscreen-wiper blade of unitary structure**
Scheibenwischerblatt aus einem Stück und Verfahren zur seiner Herstellung
Balai d'essuie-glace d'une seule pièce, et méthode de sa construction

(30) Priority: 24.09.1990 IT 6770990
(43) Date of publication of application: 01.04.1992
(73) Proprietor: Cooper Industries Italia S.p.A., 20124 Milano (IT)
(72) Inventor: Scorsiroli, Marcello, I-10137 Torino (IT)
(74) Representative: Bosotti, Luciano

(56) References cited:
- FR-A- 2 168 837
- FR-A- 2 337 648
- FR-A- 2 450 181
- US-A- 3 978 543

## Description

The present invention relates to a method for manufacturing a windscreen-wiper blade of the type referred to in the preamble of claim 1 and known e.g. from FR-U-2 168 837.

More particularly, the invention relates to a method for manufacturing a windscreen wiper blade of the type defined above, in which the secondary bows are formed in a single piece with the main bow.

A windscreen wiper blade of this type is known from GB-B-1,078,066, according to which the support for the wiper blade is free to slide longitudinally through the retaining claws. This freedom to slide is necessary to allow the blade holder to bend resiliently in order to adapt itself to the shape of the surface to be wiped, but involves the risk of the support and wiper blade accidentally coming out of the blade holder, or at least being displaced from their correct central position therein.

FR-U-2 168 837 shows a windscreen-wiper blade having two integral transverse centering and stop projections projecting from the ends of a main bow to prevent the support of the wiper blade from coming out of the holder longitudinally.

The object of the invention is to provide a method for manufacturing a windscreen wiper blade of the type defined, wherein the blade holder can easily be manufactured as a unit by a single moulding operation and wherein the support with its wiper blade can be fitted in a fully automated manner without manual intervention.

According to the invention, this object is achieved by a method according to claim 1.

The invention will now be described in detail with reference to the appended drawings, provided purely by way of non-limiting example, in which:
- Figure 1 is a schematic perspective view of a windscreen wiper blade according to the invention,
Figure 2 is a partially interrupted, partially longitudinally sectioned view of Figure 1,
Figure 3 is a cross-section taken on the line III-III of Figure 2 on an enlarged scale,
Figure 4 is a plan view taken on the arrow IV of Figure 2,
Figure 5 shows in perspective the detail indicated by the arrow V in Figure 2 on an enlarged scale and upside down, and
Figure 6 is a side elevational view of the holder shown in a temporary intermediate configuration during the manufacture of the blade unit.

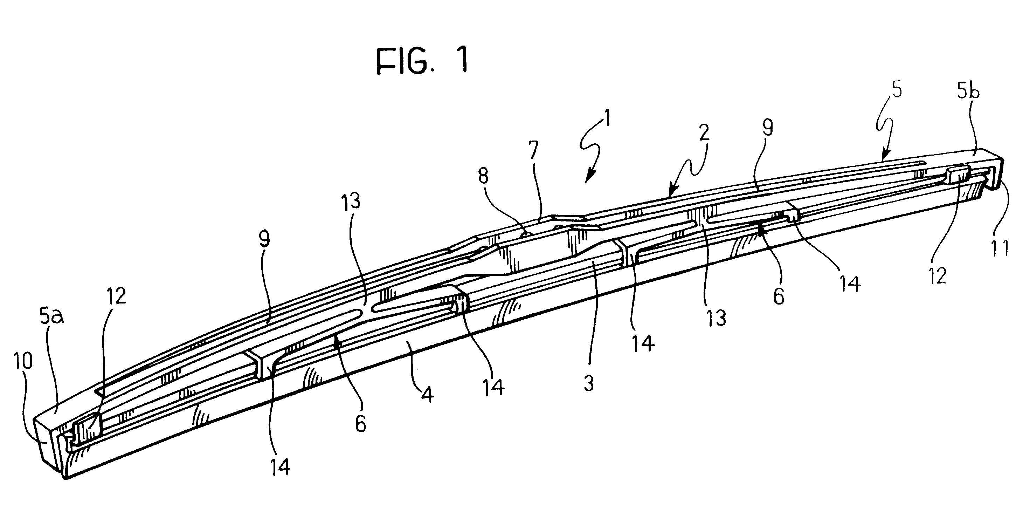

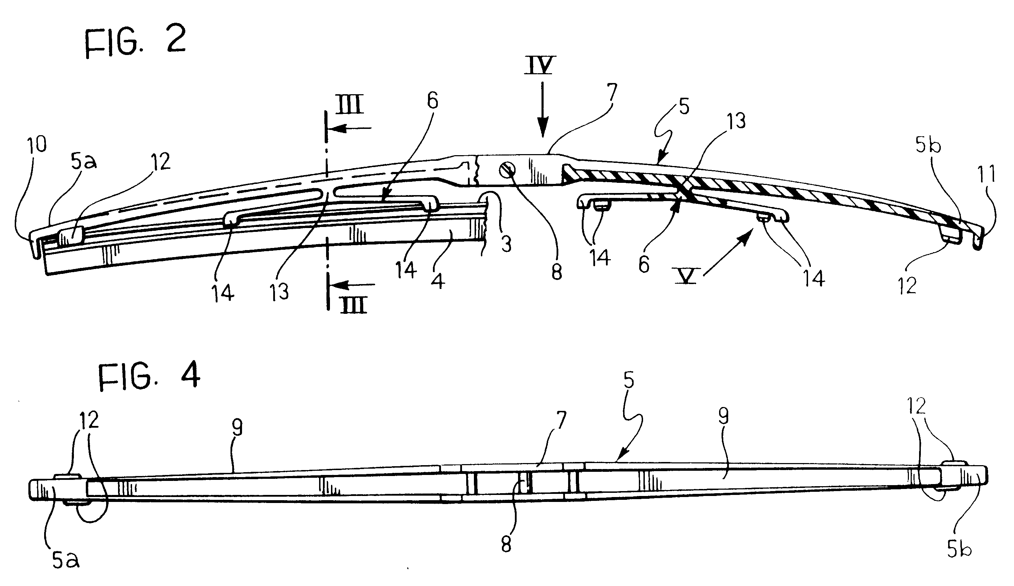

With reference initially to Figures 1, 2 and 4, a windscreen wiper blade for motor vehicles and similar applications, generally indicated 1, is constituted by only three parts:
- a one-piece holder 2 of moulded plastics material,
- a longitudinal support 3, also of plastics material,
and
- a wiper blade 4 of elastomeric material.

The holder 2 includes, in a single piece, a main bow 5 and two secondary bows or compensators 6 having two support points and projecting from the concave side of the main bow 5.

The main bow 5 has a central attachment portion 7 including an integral transverse pin 8 for connection, normally by a connector, not shown, to an operating arm. The longitudinal regions of the main bow 5 between its attachment portion 7 and its ends 5a, 5b have channel-shaped cross-sections 9 whose cavities are in the convex side of the bow. This shape affords the main bow 5, and hence the entire holder 2, good torsional rigidity.

The ends 5a, 5b of the main bow 5 have respective end regions which project from its concave side and form two integral centering and stop projections 10 and 11, whose function will be explained below.

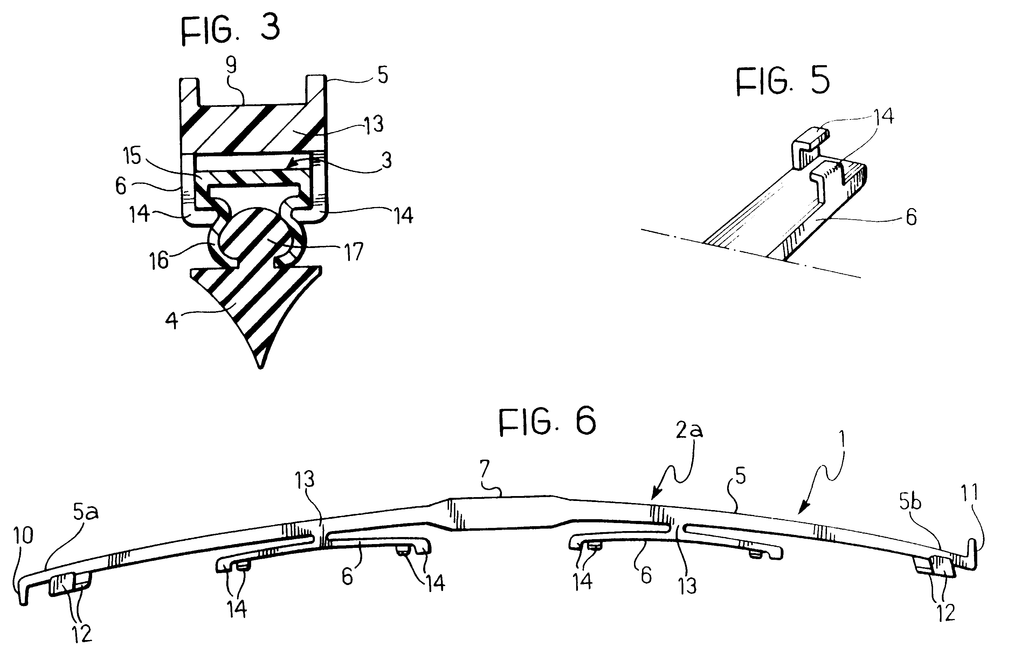

The concave side of the main bow 5 also has two pairs of lateral retaining claws 12 near its ends 5a, 5b. As can better be seen in Figure 6, the two claws 12 of each pair are offset from each other longitudinally of the blade unit 1.

The two secondary bows 6, as stated, are formed in a single piece with the main bow 5 on the concave side thereof and are connected thereto by respective bridges 13. Each secondary bow 6 has respective pairs of lateral retaining claws 14 at its ends and, as shown in greater detail in Figure 5, these are also offset from each other longitudinally of the blade unit 1.

With reference in greater detail to Figure 3, the longitudinal support 3 is constituted by an elongate body normally produced by extrusion, including a base portion 15 which is engaged between the claws 12 of the main bow 5 and the claws 14 of the secondary bows 6, and a hollow retaining portion 16 which projects below the claws 12 and 14. The retaining portion 16 has a rounded cross-section and houses a base portion 17 of complementary shape integral with the wiper blade 4. The blade 4 is also normally produced by extrusion.

In the assembled condition of the windscreen-wiper blade 1 shown in Figures 1, 2 and 4, the support 3 with its wiper blade 4 is inserted in the manner described above between the claws 12 and 14 so that its ends, and hence the corresponding ends of the wiper blade 4, face the centering and stop projections 10, 11 a short distance therefrom. This allows limited longitudinal sliding of the support 3-wiper blade 4 assembly relative to the holder 2 and, at the same time, ensures their correct relative positioning. The projections 10, 11, however, prevent the support 3-wiper blade 4 assembly from becoming disengaged longitudinally from the retaining claws 12, 14 of the holder 2.

According to the invention, the windscreen-wiper blade 1 is produced in a fully automated and automatic manner by a C.I.M. (COMPUTER INTEGRATED MANUFACTURING) method, that is, without the need for human intervention.

This method provides for the production, in a first stage, of the holder 2 on the one hand and of the support 3 and the wiper blade 4 on the other hand.

The holder 2 is produced by a single step in which a thermoplastics material is moulded in a die, for example, by injection, so as to form the holder in its initial temporary configuration indicated 2a in Figure 6. In this configuration, the holder includes, in a single piece, the main bow 5 with its attachment portion 7 and its retaining claws 12, the secondary bows 6 with their retaining claws 14, and the centering and stop projection 10.

The other centering and stop projection 11, however, is moulded, temporarily, on the side opposite the projection 10, that is, it projects from the convex side of the main bow 5.

The support 3 and the wiper blade 4 are formed in turn by the extrusion of a thermoplastics material and an elastomeric material respectively, and are then assembled by the insertion of the base portion 17 in the retaining portion 16.

The support 3-wiper blade 4 assembly and the holder 2 are then assembled by the insertion and sliding of the base portion 15 between the claws 12 and 14 from the end 5b of the main bow 5 which corresponds to the projection 11.

After the support 3-wiper blade 4 assembly has reached its correct central position in the holder 2, the last step of the method, which consists of the changing of the projection 11 from its temporary position of Figure 6 to its final position of Figures 1, 2 and 4, is carried out.

This step is effected by the ultrasonic transfer of the thermoplastics material constituting the projection 11 from the convex side of the main bow 5 to the concave side.

In use, the shape of the holder 2 and, in particular, the arrangement of the two secondary bows 6 enable the pressure imparted by the operating arm to be distributed uniformly along the wiper blade 4. The projections 10 and 11 keep the wiper blade 4 in its correct central position in the holder 2 whilst allowing small longitudinal relative displacements due to any variations in the curvature of the holder 2 as it adapts itself to the surface to be wiped but preventing the support 3-wiper blade 4 assembly from accidentally coming out of the holder 2.

Naturally, the details of construction and forms of embodiment may be varied widely with respect to those described and illustrated, without thereby departing from the scope of the present invention as defined in the claims.

## Claims

1. A method for manufacturing a windscreen-wiper blade (1), comprising:
- a blade (4) and a means (3) for supporting the blade (4); and
- a structure (2) including:
- a main bow (5) having a plurality of retaining claws (12) and an attachment portion (7) for connecting same to a wiper arm;
- at least two secondary bows (6) having a plurality of retaining claws (14);
- a first and a second centering and stop projections (10, 11) at respective first and second ends (5a, 5b) of said main bow (5) for preventing the blade (4) and its supporting means (3) from longitudinal disengagement from said structure (2),
the method comprising the following steps:
a) moulding a structure (2) as one piece out of a thermoplastic material,
b) assembling the wiper blade (4) and a support means (3) with each other, and
c) inserting and sliding said wiper blade (4) and said support means (3) assembly from the second end (5b) of the main bow (5) between the retaining claws (12, 14) of the main and secondary bows (5, 6)
characterised in that the structure (2) is moulded with its second centering and stop projection (11) extending in a direction opposite said first centering and stop projection (10) and, after the steps b) and c) have been carried out, the second centering and stop projection (11) is shifted so that it projects from the same side as the first centering and stop projection (10) with respect to said main bow (5) and second bows (6).

2. The method according to claim 1, characterised in that said second centering and stop projection (11) is shifted by ultrasonic transfer.

## Patentansprüche

1. Verfahren zum Herstellen eines Scheibenwischerblattes (1), das umfaßt:
- ein Blatt (4) sowie eine Einrichtung (3) zum Halten des Blattes (4); und
- eine Struktur (2), die enthält:
- einen Hauptbügel (5) mit einer Vielzahl von Halteklauen (12) und einem Anbringungsabschnitt (7) zur Anbringung desselben an einem Wischerarm;
- wenigstens zwei Sekundärbügel (6) mit einer Vielzahl von Halteklauen (14);
- einen ersten und einen zweiten Zentrier-und-Anschlag-Vorsprung (10, 11) jeweils an einem ersten und einem zweiten Ende (5a, 5b) des Hauptbügels (5), die Lösen des Blattes (4) und seiner Halterungseinrichtung (3) von der Struktur (2) in Längsrichtung verhindern,
wobei das Verfahren die folgenden Schritte umfaßt:
a) Formen einer Struktur (2) als ein Stück aus einem Thermoplastmaterial,
b) Zusammenbau des Wischerblattes (4) und der Halterungseinrichtung (3), und
c) Einführen und Schieben der aus dem Wischerblatt (4) und der Halterungseinrichtung (3) bestehenden Baugruppe vom zweiten Ende (5b) des Hauptbügels (5) zwischen den Halteklauen (12, 14) des Haupt- und der Sekundärbügel (5, 6),
**dadurch gekennzeichnet**, daß die Struktur (2) so geformt wird, daß sich ihr zweiter Zentrier-und-Anschlag-Vorsprung (11) in einer Richtung entgegengesetzt zum ersten Zentrier-und-Anschlag-Vorsprung (10) erstreckt, und daß, nachdem die Schritte b) und c) ausgeführt worden sind, der zweite Zentrier-und-Anschlag-Vorsprung (11) so verschoben wird, daß er von der gleichen Seite wie der erste Zentrier-und-Anschlag-Vorsprung (10) in bezug auf den Hauptbügel (5) und die Sekundärbügel (6) vorsteht.

2. Verfahren nach Anspruch 1, **dadurch gekennzeichnet**, daß der zweite Zentrier-und-Anschlag-Vorsprung (11) durch Ultraschallumformen verschoben wird.

## Revendications

1. Procédé pour fabriquer un balai d'essuie-glace (1) comportant:
- un balai (4) et des moyens (3) pour supporter le balai (4), et
- une structure (2) comportant :
- un arc principal (5) comportant plusieurs pinces de retenue (12) et une partie de fixation (7) destinée à relier celui-ci à un bras d'essuie-glace,
- au moins deux arcs secondaires (6) comportant plusieurs pinces de retenue (14),
- une première et une seconde saillies de centrage et d'arrêt (10,11) situées au niveau de première et seconde extrémités respectives (5a, 5b) dudit arc principal (5) pour empêcher le balai (4) et ses moyens de support (3) de se libérer longitudinalement de la dite structure (2),
le procédé comportant les étapes consistant à :
a) mouler une structure (2) en une seule pièce à partir d'une matière thermoplastique,
b) assembler le balai d'essuie-glace (4) et les moyens (3) de support l'un avec l'autre et
c) insérer et faire coulisser ensemble ledit balai d'essuie-glace (4) et lesdits moyens (3) de support depuis la seconde extrémité (5b) de l'arc principal (5) entre les pinces de retenue (12,14) de l'arc principal et des arcs secondaires (5,6)
caractérisé en ce que la structure (2) est moulée ayant sa seconde saillie de centrage et d'arrêt (11) s'étendant dans une direction opposée par rapport à la dite première saillie de centrage et d'arrêt (10) et, après que les étapes b) et c) aient été exécutées, la seconde saillie de centrage et d'arrêt (11) est déplacée de telle sorte qu'elle fasse saillie à partir du même côté que la première saillie de centrage et d'arrêt (10) par rapport audit arc principal (5) et aux arcs secondaires (6).

2. Procédé selon la revendication 1, caractérisé en ce que ladite seconde saillie de centrage et d'arrêt (11) est déplacée par transfert aux ultrasons.
